# EUROPEAN PATENT APPLICATION

(11) **EP 4 467 666 A1**
(43) Date of publication of application: **27.11.2024**
(21) Application number: 23806160.0
(22) Date of filing: 30.05.2023
(51) Int. Cl.: C21B 7/24, C21B 5/00, B65H 54/28

(54) **CHARGING MATERIAL SURFACE PROFILE DETECTION DEVICE AND OPERATION METHOD**

(30) Priority: 14.04.2023 JP 2023066558
(71) Applicant: Wadeco Co., Ltd., Amagasaki-shi, Hyogo 661-0021 (JP)
(72) Inventor: KAYANO, Hayae, Amagasaki-shi, Hyogo 661-0021 (JP); KUROSE, Kenji, Amagasaki-shi, Hyogo 661-0021 (JP); MATSUMOTO, Koichi, Amagasaki-shi, Hyogo 661-0021 (JP); IMOTO, Hiroyuki, Amagasaki-shi, Hyogo 661-0021 (JP)
(74) Representative: Hoefer & Partner Patentanwälte mbB
(86) International application number: PCT/JP2023/020120
(87) International publication number: WO 2024/214312

(57) **Abstract**

A surface profile detection apparatus 100 of a burden includes: a transmission and reception means 101 for transmitting and receiving a detection wave M, an antenna 104 connected to the transmission and reception means 101 and configured to transmit and receive the detection wave M, a circumferential scanning means for scanning the detection wave M in a circumferential direction of a container 1, and a diametrical scanning means for scanning the detection wave M in a diametrical direction of the container 1 by tilting an angle variable reflection plate 106, wherein the diametrical scanning means tilts the angle variable reflection plate 106 by means of a swing mechanism (traverse cam 121) and a spline 123 driven by a drive source for driving the circumferential scanning means. The circumferential scanning means and the diametrical scanning means are caused to cooperate with each other, thereby three-dimensionally detecting a surface profile of the burden.

## Description

### TECHNICAL FIELD

The present invention relates to a detection apparatus for three-dimensionally detecting a surface profile of a burden deposited in containers of various facilities. The present invention also relates to an operation method using the detection apparatus.

### BACKGROUND ART

Known is a detection apparatus for detecting a surface profile of a burden by transmitting a detection wave toward a surface of the burden loaded and deposited in containers of various facilities, such as iron ore or coke in a blast furnace, molten steel in a converter furnace, coal in a hopper, wastes in an incinerator, and grains in a storage house such as a silo, and receiving a reflected wave.

For example, in a blast furnace, iron ore and coke are usually loaded alternately from the top of the furnace, and a loading operation is performed so that a surface profile of the burden becomes an inverted cone shape such as an antlion's pit. In such a blast furnace, when a deposited state of iron ore or coke is optimized, a gas flow in the furnace becomes stable, so that the fuel cost can be saved and the service life of a furnace body can be extended. In order to obtain an optimized deposited state, it is necessary to accurately measure a surface profile of iron ore or coke in a short time, and to supply the iron ore or coke so as to be a theoretical deposited state obtained in advance, i.e., "theoretical deposition profile".

In order to detect the surface profile of the burden in such a blast furnace, the present applicant also first proposed a detection apparatus shown in Patent Literature 1. In the detection apparatus described in Patent Literature 1, an angle variable reflection plate having a reflection surface for a detection wave whose inclination angle toward a blast furnace is variable, and an angle fixed reflection plate are used, the angle variable reflection plate and the angle fixed reflection plate are attached to a rotating plate that rotates horizontally with respect to an opening part of the blast furnace, and the rotating plate is rotated, so that a surface profile of a burden deposited in the blast furnace is quickly detected in a linear or planar shape.

### CITATION LIST

### PATENT LITERATURE

Patent Literature 1: Japanese Patent No. 6857933B

### SUMMARY OF INVENTION

### TECHNICAL PROBLEM

The detection apparatus of Patent Literature 1 is configured to transmit the detection wave in a diametrical direction of the blast furnace by the inclination angle of the angle variable reflection plate, while rotating the rotating plate. For this reason, two motors, i.e., a motor for rotating the rotating plate (a reference sign 113 in FIG. 2 of Patent Literature 1) and a motor for changing the inclination angle of the angle variable reflection plate (a reference sign 125 in FIG. 2 of Patent Literature 1) are required. In addition, two control means for controlling the motors are also required.

The present invention has been made in view of the above situations, and an object thereof is to provide an inexpensive detection apparatus by further simplifying an apparatus configuration for three-dimensionally detecting a surface profile of a burden. In addition, the present invention is to provide an operation method for using such a detection apparatus and supplying a burden to a container of a facility, based on a detection result.

### SOLUTION TO PROBLEM

In order to achieve the above objects, the present invention provides a surface profile detection apparatus of a burden, which will be described in (1) to (9) below.

(1) A surface profile detection apparatus of a burden, the surface profile detection apparatus being installed to an opening of a container of various facilities and being configured to detect a surface profile of the burden by transmitting, through the opening, a detection wave toward a surface of the burden supplied and deposited in the container and receiving the detection wave reflected on the surface of the burden. The surface profile detection apparatus includes:
a transmission and reception means for transmitting and receiving the detection wave;
an antenna connected to the transmission and reception means and configured to transmit and receive the detection wave;
a circumferential scanning means for scanning the detection wave in a circumferential direction of the container; and
a diametrical scanning means for scanning the detection wave in a diametrical direction of the container by tilting an angle variable reflection plate.

The diametrical scanning means tilts the angle variable reflection plate by means of a swing mechanism and a spline driven by a drive source for driving the circumferential scanning means.

The circumferential scanning means and the diametrical scanning means are caused to cooperate with each other, thereby scanning the detection wave in the diametrical direction of the container while scanning the detection wave in the circumferential direction of the container.
(2) In the surface profile detection apparatus according to the above (1), in which the swing mechanism is a traverse cam or a crank mechanism.
(3) In the surface profile detection apparatus according to the above (2), in which the traverse cam is independently driven separately from the spline.
(4) In the surface profile detection apparatus of a burden according to any one of the above (1) to (3), in which a rotating case having an opening formed on a bottom surface facing the container is provided.
(5) In the surface profile detection apparatus according to the above (4), in which the antenna is accommodated in the rotating case and the antenna is not rotated.
(6) In the surface profile detection apparatus according to the above (4), in which an angle fixed plate configured to transmit the detection wave from the antenna to an angle fixed reflection plate, the angle variable reflection plate, and a link mechanism connected to the angle variable reflection plate are accommodated in the rotating case, and the angle fixed reflection plate, the angle variable reflection plate, and the link mechanism are simultaneously rotated.
(7) In the surface profile detection apparatus according to the above (4), in which the opening of the rotating case is covered with an adiabatic material made of a heat-resistant material that transmits the detection wave, and a purge gas is ejected from the container side toward the adiabatic material along a radial direction to remove dust attached to the adiabatic material.
(8) In the surface profile detection apparatus according to the above (4), including:
   an outer box surrounding the rotating case and attached to the opening of the container, and
   an air filter configured to block the opening of the container and made of a heat-resistant material that transmits the detection wave,
   in which a purge gas blown from a purge gas intake port provided in the outer box is discharged from the air filter.
(9) In the surface profile detection apparatus according to the above (1), in which driving of the circumferential scanning means and the diametrical scanning means is intermittently stopped, a plurality of measurements are performed at stopped positions to obtain an average value.

In addition, in order to achieve the above objects, the present invention provides an operation method, which will be described in (10) below.

(10) An operation method including supplying the burden to the container, based on a detection result by the surface profile detection apparatus of a burden according to any one of the above (1) to (9).

Note that in descriptions below, "the surface profile detection apparatus of a burden" is simply referred to as "the detection apparatus."

### ADVANTAGEOUS EFFECTS OF INVENTION

According to the detection apparatus of the present invention, the circumferential scanning means and the diametrical scanning means are provided, a surface profile of the burden can be detected three-dimensionally, and the drive source of the circumferential scanning means and the diametrical scanning means is made common, so that the apparatus configuration is simple and the apparatus is inexpensive.

In addition, according to the operation method of the present invention, the surface profile of the burden can be detected three-dimensionally, the burden can be accurately supplied to various facilities, and a favorable operation is possible.

### BRIEF DESCRIPTION OF DRAWINGS

FIG. 1 is a cross-sectional view schematically showing an apparatus configuration of a first embodiment of a detection apparatus of the present invention.
FIG. 1A is a view showing a structure of a nozzle for ejecting a purge gas for removing attachments, (A) of FIG. 1A is a top view seen from an adiabatic material, (B) of FIG. 1A is a view seen in a direction of an arrow A-A in (A) of FIG. 1A, and (C) in FIG. 1A is a view seen in a direction of an arrow B-B in (A) of FIG. 1A.
FIG. 1B is a schematic view showing a reflected state of a detection wave M when using the nozzle shown in FIG. 1A, and is a cross-sectional view taken along a line C-C in (A) of FIG. 1A.
FIG. 1C is a schematic view showing a reflected state of the detection wave M when using the nozzle shown in FIG. 1A, and is a cross-sectional view taken along a line D-D in (A) of FIG. 1A.
FIG. 2 is a cross-sectional view schematically showing an apparatus configuration of a second embodiment of the detection apparatus of the present invention.
FIG. 3 is a cross-sectional view schematic showing an apparatus configuration of a third embodiment of the detection apparatus of the present invention.
FIG. 4 is a schematic diagram showing an apparatus configuration of a fourth embodiment of the detection apparatus of the present invention, based on the first embodiment.
FIG. 5 is a schematic diagram showing a scanning principle of the detection apparatus of the present invention.
FIG. 6 shows a scanning line when an operation of a crank mechanism is changed, in the second embodiment.

### DESCRIPTION OF EMBODIMENTS

Hereinafter, the present invention will be described in detail with reference to the drawings.

### Detection Apparatus

### Basic Configuration

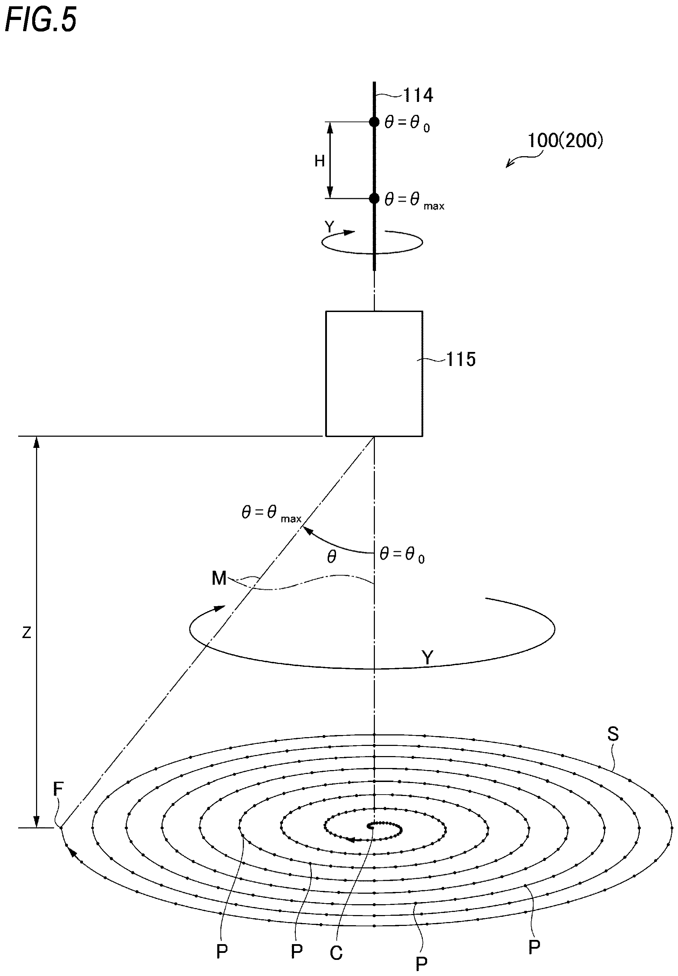

A basic configuration of an detection apparatus includes a circumferential scanning means for scanning a detection wave M in a circumferential direction of a container, and a diametrical scanning means for scanning the detection wave M in a diametrical direction of the container, and both the circumferential scanning means and the diametrical scanning means are operated to scan the detection wave in the diametrical direction of the container while scanning the detection wave in the circumferential direction of the container, and as described below, a surface profile of a burden can be detected three-dimensionally by performing a calculation every moment based on a height Z of an insertion surface of the burden in the container (refer to FIG. 5) and an inclination angle of a reflection surface of an angle variable reflection plate. In addition, a drive source of the circumferential scanning means and the diametrical scanning means is made common.

### First Embodiment

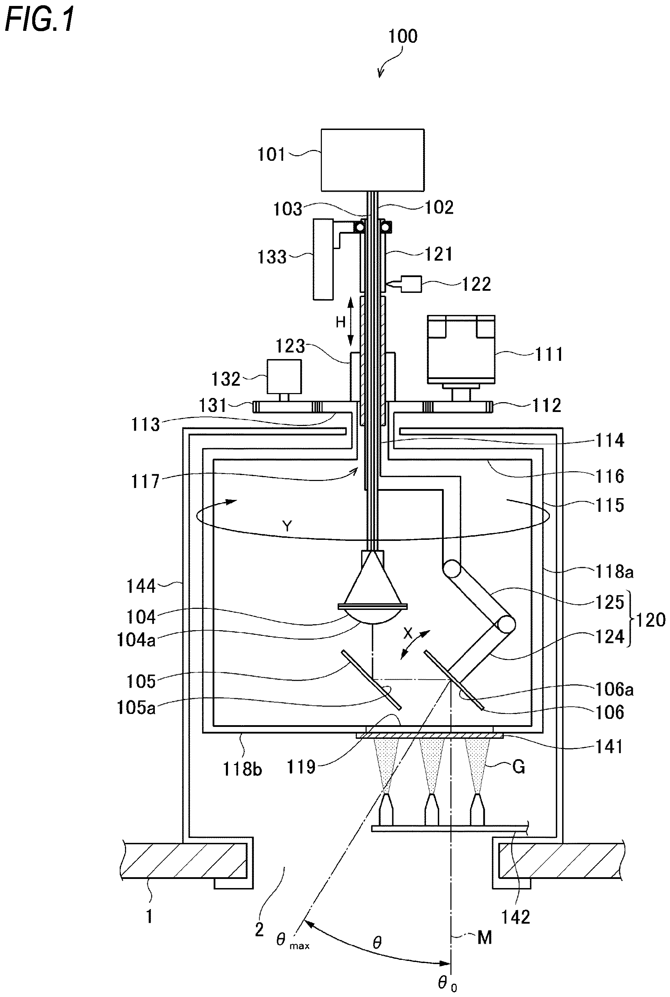

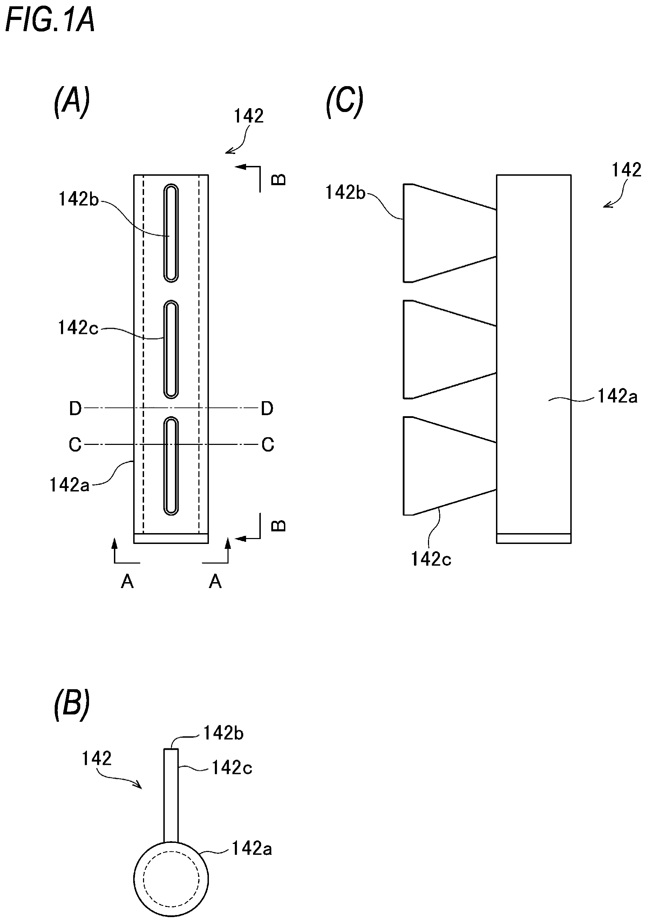

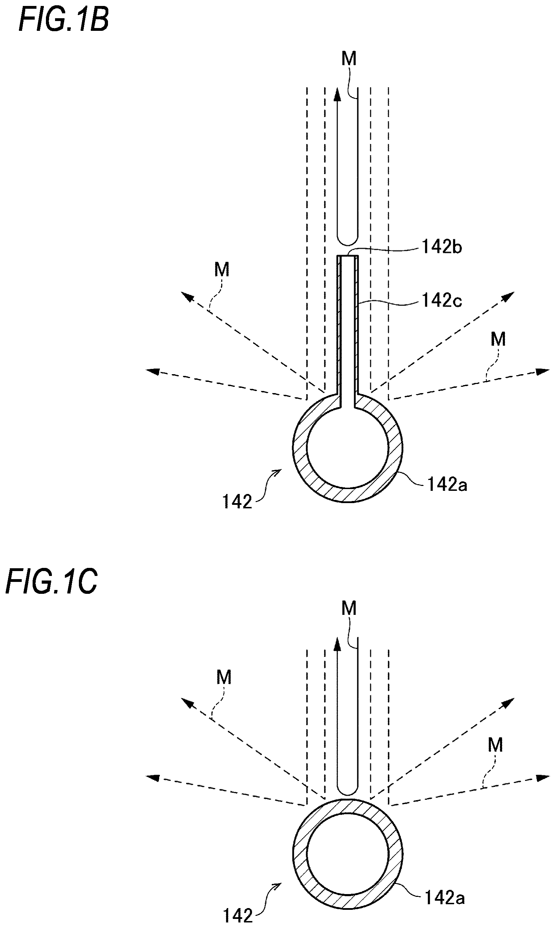

An example of such a detection apparatus may include a detection apparatus 100 shown in a cross-sectional view of main parts in FIG. 1. Note that the detection wave M is appropriately selected depending on a type of a facility or burden. However, a microwave or a millimeter wave as the detection wave M is herein exemplified and described. A microwave and a millimeter wave can be favorably used even in a facility such as a blast furnace that is at high temperatures and produces mist or dust.

As shown, an antenna 104 is connected to a transmission and reception means 101 for transmitting and receiving the detection wave M via a waveguide 103 that is inserted in a fixed shaft 102. Note that in FIG. 1, a dielectric lens 104a is attached to the antenna 104 to improve miniaturization of the antenna 104 and directivity of the detection wave M. However, the dielectric lens 104a is not necessarily required. In addition to using a shown horn antenna as the antenna 104, a parabolic antenna or a Cassegrain antenna may also be used.

In the drawing, an angle fixed reflection plate 105 is disposed below the antenna 104. The angle fixed reflection plate 105 is accommodated in a rotating case 115, and a reflection surface 105a of the angle fixed reflection plate 105 is disposed facing an antenna surface of the antenna 104 with being inclined at an angle of 45°.

In addition, an angle variable reflection plate 106 is disposed facing the angle fixed reflection plate 105. The angle variable reflection plate 106 is a reflection plate whose inclination angle of a reflection surface 106a varies in a direction indicated by a reference sign X in the drawing. A first link 124 of a link mechanism 120 is fixed to a center of a surface (rear surface) opposite to the reflection surface 106a of the angle variable reflection plate 106, and a second link 125 is connected to the first link 124. The reflection surface 106a of the angle variable reflection plate 106 is tilted by the link mechanism 120.

A shape of the rotating case 115 when seen from above a top plate 116 in the drawing is a brass coin shape, and a side wall thereof is continuous to surround the top plate 116. The angle fixed reflection plate 105, the angle variable reflection plate 106, and the link mechanism 120 are fixed to a straight portion of the side wall. In addition, a center of the top plate 116 is open, and a fixed shaft 102 is inserted into the opening part 117. For this reason, the antenna 104 is accommodated in a suspended state inside the rotating case 115.

A vertical rotary shaft 114 is loosely fitted on an outer peripheral surface of the fixed shaft 102. The vertical rotary shaft 114 is inserted into the opening part 117 of the rotating case 115. In addition, the vertical rotary shaft 114 extends in a crank shape from a lower end toward a side wall 118a of the rotating case 115, and a tip end thereof is connected to the second link 125 of the angle variable reflection plate 106.

A gear 113 composed of a disk with a through-hole at a center is provided integrally with the opening part 117 of the rotating case 115. The gear 113 is in mesh with a gear 112 attached to a shaft of a motor 111, and therefore, when the motor 111 is driven, the rotating case 115 rotates in the Y direction in the drawing. The rotation of the rotating case 115 is detected by a rotation detection encoder 132 via a gear 131.

Additionally, a spline 123 is attached to the gear 113, and an outer peripheral surface of the vertical rotary shaft 114 is attached to an inner peripheral surface of the spline 123.

Therefore, when the rotating case 115 is rotated in the Y direction by the motor 111, the angle fixed reflection plate 105, the angle variable reflection plate 106, the link mechanism 120, and the vertical rotary shaft 114 rotate together in the same direction. Thereby, the burden is scanned in a circumferential direction.

On the other hand, even when an axis of the rotating case 115 rotates, the antenna 104 remains fixed without rotating with the fixed shaft 102.

### In addition, a traverse cam 121 is attached to the outer peripheral surface of the vertical rotary shaft 114. The traverse cam 121 has a spiral groove machined on a shaft, and the spiral groove is connected at both ends to form an endless loop. When the traverse cam 121 rotates, the traverse cam 121 repeatedly moves on the shaft from one end toward the other end. This movement is "swing". In addition, a traverse cam vertical inversion metal fitting 122 of the traverse cam 121 is provided at an appropriate position of the traverse cam 121. Note that FIG. 1 shows a state in which the traverse cam 121 has moved to the top. When the traverse cam 121 reaches the top, a direction is inverted, and the traverse cam moves downward, and is inverted upward again by the traverse cam vertical inversion metal fitting 122. This movement in the vertical direction is indicated by a reference sign H, and an amount of movement in the vertical direction is detected and controlled by a vertical detection encoder 133.

Such an operation of the traverse cam 121 is transmitted to the link mechanism 120 via the vertical rotary shaft 114, and the inclination angle of the reflection surface 106a of the angle variable reflection plate 106 changes in the left-right direction in the drawing in conjunction with the movement of the link mechanism 120. Along with the tilting of the angle variable reflection plate 106, a transmission angle θ of the detection wave M changes. The transmission angle θ of the detection wave M becomes zero (θ₀) when the inclination angle of the reflection surface 106a of the variable angle reflection plate 106 is 45°, which is the same as the inclination angle of the reflection surface 105a of the angle fixed reflection plate 105, and becomes the maximum (θₘₐₓ) when the reflection surface 106a of the angle variable reflection plate 106 becomes the maximum elevation angle with respect to the reflection surface 105a of the angle fixed reflection plate 105. This θₘₐₓ is set appropriately in accordance with an inner diameter of the container. Note that θₘₐₓ can be determined by changing a length of the traverse cam 121 or changing lengths of the first link 124 and the second link 125. In this way, the burden can be scanned in a diametrical direction by tilting the reflection surface 106a of the angle variable reflection plate 106.

In addition, the rotating case 115 is accommodated in an outer box 144.

In this way, the drive source that rotates the rotating case 115 for performing scanning in the circumferential direction and the drive source that moves the vertical rotary shaft 114 for performing scanning in the diametrical direction in a vertical direction, via the traverse cam 121, , can be done by the same motor 111. Additionally, since the motor 111 rotates continuously in one direction, a control panel (not shown) is not required.

Note that the detection apparatus 100 is used with the outer box 144 attached to an opening 2 of a container 1, and in this case, floating substances inside the container 1 are introduced from the opening 2. Therefore, an opening part 119 of a bottom surface 118b of the rotating case 115 of the detection apparatus 100 is covered with an adiabatic material 141 made of a heat-resistant material that transmits the detection wave M, a nozzle 142 is disposed on a container side (lower side in the drawing) of the adiabatic material 141, and a purge gas G is ejected to remove attachments on the adiabatic material 141. Note that since the rotating case 115 rotates, the opening part 119 of the bottom surface 118b of the rotating case 115 is favorably open at a part below the angle variable reflection plate 106, i.e., a part corresponding to a half of a long axis of the top plate 116, as shown, and the opening part 119 is covered with the adiabatic material 141.

In order to suppress the influence of the nozzle 142 on the transmission of the detection wave M, it is preferable to use the nozzle 142 shown in FIG. 1A, for example. Note that FIG. 1A is a view showing a structure of the nozzle 142, (A) of FIG. 1A is a top view seen from the adiabatic material 141, (B) of FIG. 1A is a view seen in a direction of an arrow A-A in (A) of FIG. 1A, and (C) in FIG. 1A is a view seen in a direction of an arrow B-B in (A) of FIG. 1A.

As shown, the nozzle 142 is composed of protrusions 142c protruding from a main body 142a made of a circular pipe (circular tube) and gradually widening toward ejection ports (injection ports) 142b of the purge gas G. The purge gas G is supplied to the main body 142a, and the purge gas G is ejected to the outside from the ejection ports 142b via the protrusions 142c. Since the rotating case 115 rotates, the purge gas G may be ejected along a radius of the rotating case 115, as shown.

In addition, FIG. 1B is a cross-sectional view taken along a line C-C in (A) of FIG. 1A, and FIG. 1C is a cross-sectional view taken along a line D-D in (A) of FIG. 1A. Regarding the detection wave M which passes through the adiabatic material 141 and is incident on the nozzle 142, as shown by a solid line in FIG. 1B, a part of the detection wave M is reflected in the same direction as the incident direction by the ejection port 142b at the tip end of the nozzle. The reflected wave in the same direction as the incident direction interferes with the detection wave M passing through the adiabatic material 141, attenuating the transmission intensity of the detection wave M transmitted from the transmission and reception means 101.

For this reason, in order to reduce the detection wave M that is reflected on the ejection port 142b, an opening area of the ejection port 142b is preferably made smaller. For example, the ejection port 142b is disposed in a linear shape along the main body 142a, and an opening shape of the ejection port 142b is formed into a horizontally long oval shape having a major axis in a longitudinal direction of the main body 142a, as shown in (A) of FIG. 1A. The shorter the minor axis of the ejection port 142b is, the smaller the detection wave M reflected on the ejection port 142b is. In addition, as shown by a solid line in FIG. 1C, between the ejection port 142b and the ejection port 142b, the detection wave M is reflected on the outer peripheral surface of the main body 142a, and a part thereof is reflected in the same direction as the incident direction. In this way, a part of the detection wave M is reflected in a linear shape along the longitudinal direction of the main body 142a.

On the other hand, the other detection waves M are reflected in various directions by the outer peripheral surface of the main body 142a, as shown by broken lines in FIGS. 1B and 1C.

In this way, by making the detection wave M reflected in the same direction as the incident direction smaller than the detection wave M reflected in a different direction from the incident direction, the influence of the nozzle 142 on the reflected wave can be substantially eliminated.

### Second Embodiment

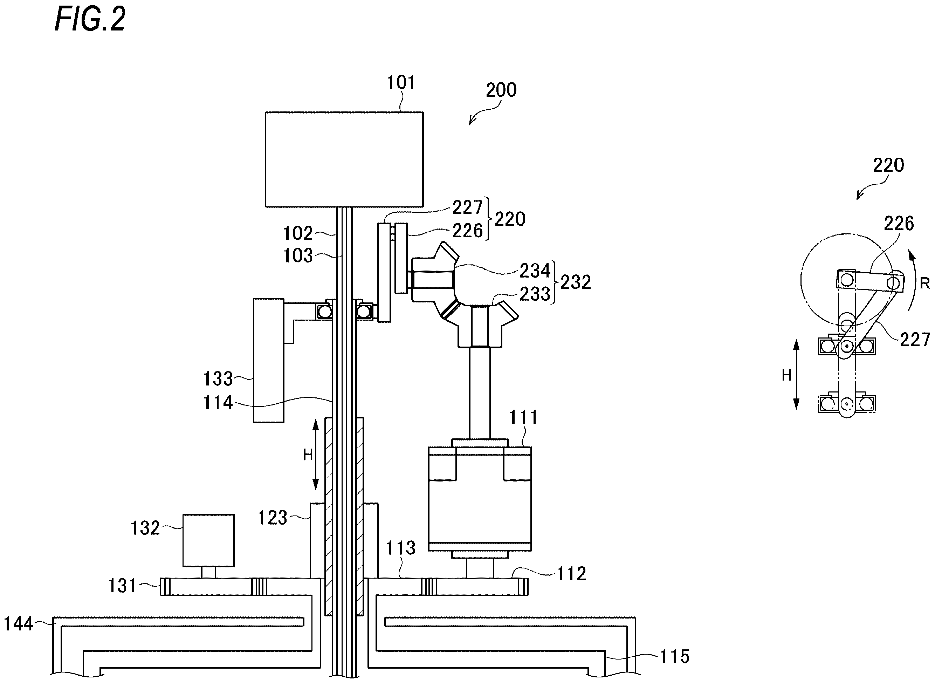

In the detection apparatus 100 of the first embodiment, the traverse cam 121 is used as a "swing mechanism," but in a second embodiment, as shown in FIG. 2, a crank mechanism 220 can also be used. Note that in FIG. 2, a detection apparatus is similar to the detection apparatus 100 of the first embodiment, except for the crank mechanism 220, and the same reference numerals are used to omit description.

As shown in FIG. 2, in a detection apparatus 200 of the second embodiment, the motor 111 has a shaft penetrating therethrough, one end of the shaft is connected to the gear 112, and the other end is connected to a bevel gear 232. The bevel gear 232 is composed of a first bevel gear 233 and a second bevel gear 234. For this reason, when the motor 111 rotates, the first bevel gear 233 rotates in the same direction along with the rotating case 115, and the rotation is transmitted to the second bevel gear 234.

The crank mechanism 220 is composed of a first crank 226 and a second crank 227, and the first crank 226 is connected to the second bevel gear 234, and the second crank 227 is connected to the vertical rotary shaft 114.

When the first bevel gear 233 is rotated by the motor 111, the rotation is transmitted to the second bevel gear 234, so that, as shown on the right side of FIG. 2, the first crank 226 rotates in an R direction, and moves in a circular motion as indicated by a dash-dotted line. Along with this, the second crank 227 also moves in a circular motion, and the vertical rotary shaft 114 connected to the second crank 227 moves vertically as indicated by a reference sign H.

In this way, as the drive source that rotates the rotating case 115 for performing scanning in the circumferential direction and the drive source that vertically moves, via the crank mechanism 220, the vertical rotary shaft 114 for performing scanning in the diametrical direction, the same motor 111 can be used.

### Third Embodiment

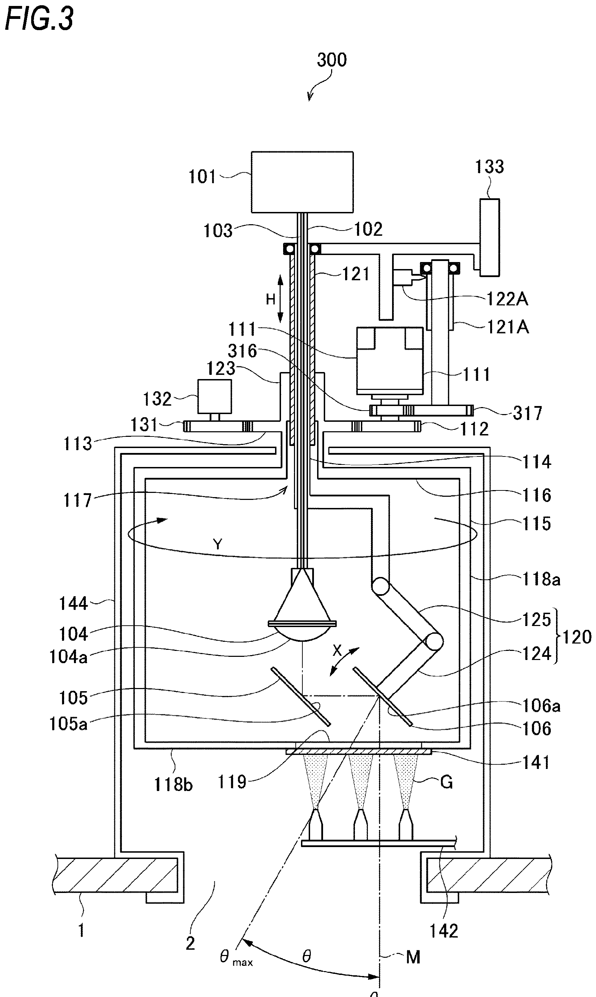

In the first embodiment, the traverse cam 121 is directly attached to the vertical rotary shaft 114, but in a third embodiment, as shown in FIG. 3, a traverse cam 121A can be driven independently. Note that in FIG. 3, the third embodiment is similar to the first embodiment, except for the traverse cam 121 A, and the same reference numerals are used to omit description.

As shown in FIG. 3, in a detection apparatus 300 of the third embodiment, gears 316 and 317 for rotating the traverse cam 121A are in mesh with the motor 111. When the motor 111 rotates, a traverse cam vertical inversion metal fitting 122A moves vertically, and the vertical rotary shaft 114 moves vertically in the H direction. Then, the gears 316 and 317 rotate, and the traverse cam 121A rotates and moves vertically in the H direction. Note that FIG. 3 shows a state in which the traverse cam vertical inversion metal fitting 122A has moved to the top. When the traverse cam vertical inversion metal fitting 122A reaches the top, a direction is inverted, and the traverse cam moves downward, and is inverted upward again by the traverse cam vertical inversion metal fitting 122A.

In addition, while the traverse cam vertical inversion metal fitting 122A is moving vertically, the gears 112 and 113 rotate and the rotating case 115 rotates in the Y direction. At the same time, the spline 123 rotates and the traverse cam vertical inversion metal fitting 122A moves vertically, so that the vertical rotary shaft 114 moves vertically, and the angle variable reflection plate 106 tilts. In the third embodiment, the traverse cam vertical inversion metal fitting 122A is fixed, but in the third embodiment, the traverse cam vertical inversion metal fitting 122A moves vertically, which is different from the first embodiment.

In this case as well, as the drive source that rotates the rotating case 115 and the drive source that vertically moves the vertical rotary shaft 114, the same motor 111 can be used.

Additionally, as compared with the first embodiment, the waveguide 103 can be shortened. For this reason, attenuation while the detection wave M propagates inside the waveguide 103 can be reduced, a dimension in the height direction of the detection apparatus 300 can be shortened, and the entire apparatus can be made compact.

### Fourth Embodiment

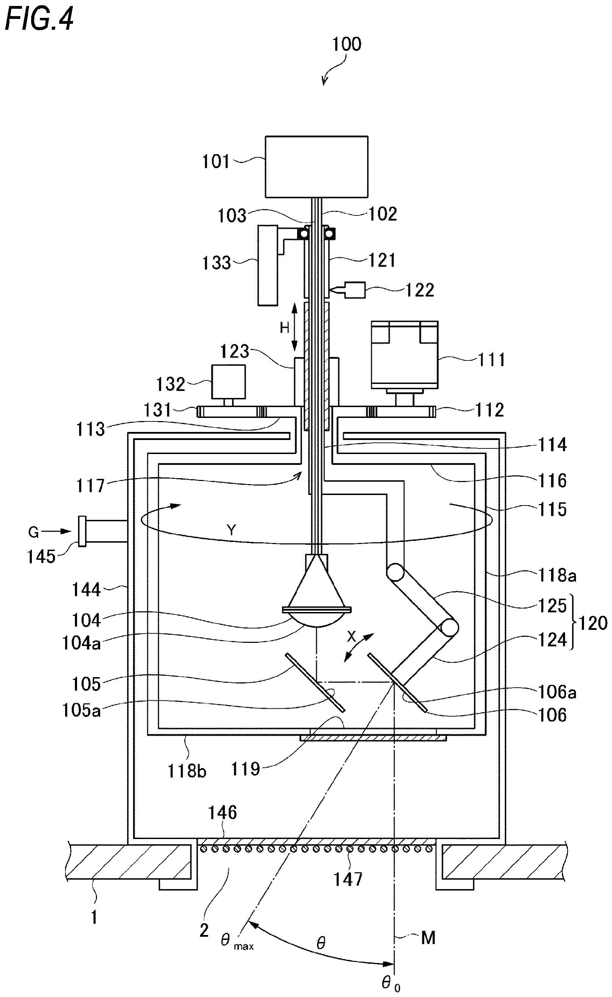

In the first to third embodiments described above, the opening part 119 of the rotating case 115 is blocked by the adiabatic material 141, and the purge gas G is ejected from the nozzle 142 to remove dust intrusion from the container 1 and attachments. However, a configuration shown in FIG. 4 is also possible. Note that FIG. 4 shows the detection apparatus 100 of the first embodiment as an example, but the second and third embodiments are also similar.

As shown, a purge gas intake port 145 for blowing the purge gas G is laid in the outer box 144, and the opening 2 of the container 1 is blocked with an air filter 146 made of a heat-resistant material that transmits the detection wave M. Note that a wire mesh 147 may be laid on the opening 2 side of the air filter 146, and the air filter 146 can be protected from large lumps of dust by the wire mesh 147. The purge gas G blown from the purge gas intake port 145 is discharged into the inside of container 1 via the air filter 146. With this configuration, it is possible to prevent dust from entering through the air filter 146 and to remove dust attached to the air filter 146.

### Scanning Principle

In the detection apparatus 100 of the first embodiment, the detection apparatus 200 of the second embodiment, and the detection apparatus 300 of the third embodiment, as schematically shown in FIG. 5, while rotating the rotating case 115 in the Y direction, the vertical rotary shaft 114 is vertically moved as indicated by the reference sign H, so that the detection wave M is simultaneously scanned in the circumferential direction and in the diametrical direction. At this time, it is assumed that when the transmission angle θ of the detection wave M is 0° (θ=0), the position of the vertical rotary shaft 114 in the H direction is at the highest point, and when the transmission angle of the detection wave M is the maximum (Θ = θₘₐₓ), the position of the vertical rotary shaft 114 in the H direction is at the lowest point. In this case, the vertical position of the vertical rotary shaft 114 changes continuously along with the rotation of the rotating case 115, and the scanning line S of the detection wave M swirly heads from a center C corresponding to θ = 0 to a point F on the outermost periphery corresponding to θₘₐₓ. When the transmission angle θ reaches θₘₐₓ, the vertical movement is inverted, and the scanning line swirly heads from P toward the center C. There are measurement points P along the swirl-shaped scanning line S, and position information at each measurement point P and distance information (time difference between transmission and reception) from the transmission and reception means 101 to the measurement point Pare obtained, so that a surface profile of a burden can be detected three-dimensionally.

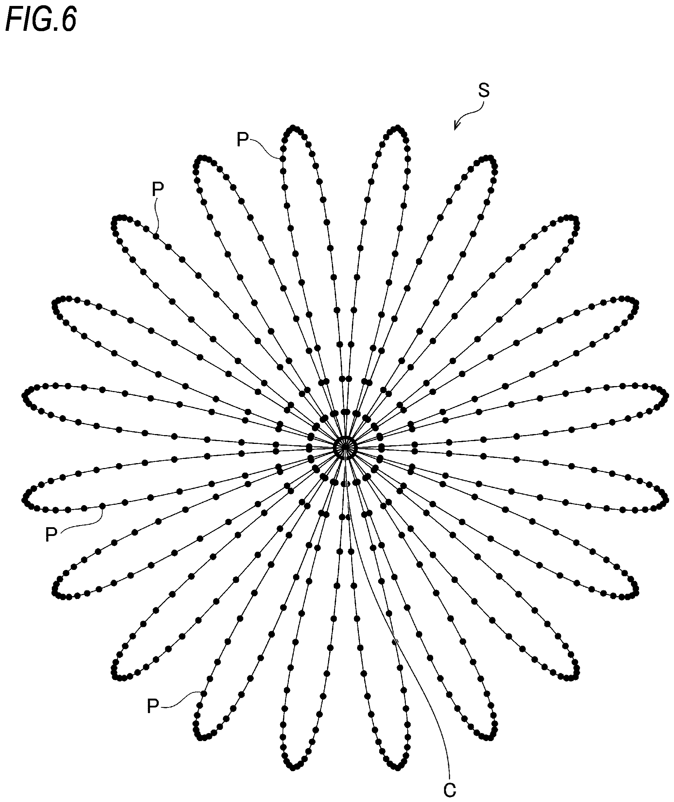

In addition, in the detection apparatus 200 of the second embodiment, by adjusting a gear ratio of the first bevel gear 233 and the second bevel gear 234, the reflection surface 106a of the angle variable reflection plate 106 (refer to FIG. 1) can be inclined multiple times while the rotating case 115 rotates once, and as shown in FIG. 6, the scanning line S can be made into a petal shape.

In the third embodiment as well, since the traverse cam 121A is driven separately, by adjusting the gear ratio of the gears 316 and 317, the reflection surface 106a of the angle variable reflection plate 106 (refer to FIG. 1) can be inclined multiple times while the rotating case 115 rotates once, and the scanning line S can be made into a petal shape shown in FIG. 6.

In the above scanning, a floor noise can be reduced by 1/√N by stopping the motor 111 intermittently, repeatedly performing measurement multiple times (N times) at the stopped positions, and addition-averaging an obtained received data spectrum waveform. Here, the measurement is to measure the distance information (i.e. time difference between transmission and reception) from the transmission and reception means 101 to the measurement point P using the position information at each measurement point P. By adding this function, the opening diameter of the antenna 104 can be made smaller and a space can be saved. Note that for a method of lowering the noise level, for example, refer to Japanese Patent No. 7149026.

### Operation Method

The present invention also relates to a method for operating various apparatuses by using the detection apparatuses 100, 200, and 300. That is, by using the detection apparatuses 100, 200 and 300 to three-dimensionally detect the surface profile of the burden supplied and deposited in the container of the facility, it is possible to accurately supply the burden on the basis of the detection result, and to perform a stable operation. For example, in a blast furnace, a more stable operation is possible by adjusting operation conditions such as an amount of supply of each of iron ore and coke and "O/C".

Although the various embodiments have been described, the present invention is not limited thereto. It is apparent to one skilled in the art that a variety of changes or modifications can be made within the scope defined in the claims and are included within the technical scope of the present invention. In addition, the respective constitutional elements in the above embodiments may be arbitrarily combined without departing from the gist of the invention.

The present application is based on Japanese Patent Application No. 2023-066558 filed on April 14, 2019, the contents of which are incorporated herein by reference.

### REFERENCE SIGNS LIST

100, 200, 300: detection apparatus (surface profile detection apparatus of burden)
101: transmission and reception means
102: fixed shaft
103: waveguide
104: antenna
104a: dielectric lens
105: angle fixed reflection plate
106: angle variable reflection plate
111: motor
114: vertical rotary shaft
115: rotating case
120: link mechanism
121, 121A: traverse cam
122, 122A: traverse cam vertical inversion metal fitting
123: spline
132: rotation detection encoder
133: vertical detection encoder
141: adiabatic material
142: nozzle
145: purge gas intake port
146: air filter
147: wire mesh
220: crank mechanism
226: first crank
227: second crank
232: bevel gear

## Claims

1. A surface profile detection apparatus of a burden, the surface profile detection apparatus being installed to an opening of a container of various facilities and being configured to detect a surface profile of the burden by transmitting, through the opening, a detection wave toward a surface of the burden supplied and deposited in the container and receiving the detection wave reflected on the surface of the burden, the surface profile detection apparatus comprising:
a transmission and reception means for transmitting and receiving the detection wave;
an antenna connected to the transmission and reception means and configured to transmit and receive the detection wave;
a circumferential scanning means for scanning the detection wave in a circumferential direction of the container; and
a diametrical scanning means for scanning the detection wave in a diametrical direction of the container by tilting an angle variable reflection plate,
wherein the diametrical scanning means tilts the angle variable reflection plate by means of a swing mechanism and a spline driven by a drive source for driving the circumferential scanning means, and
wherein the circumferential scanning means and the diametrical scanning means are caused to cooperate with each other, thereby scanning the detection wave in the diametrical direction of the container while scanning the detection wave in the circumferential direction of the container.

2. The surface profile detection apparatus according to claim 1, wherein the swing mechanism is a traverse cam or a crank mechanism.

3. The surface profile detection apparatus according to claim 2, wherein the traverse cam is independently driven separately from the spline.

4. The surface profile detection apparatus according to any one of claims 1 to 3, wherein a rotating case having an opening formed on a bottom surface facing the container is provided.

5. The surface profile detection apparatus according to claim 4, wherein the antenna is accommodated in the rotating case and the antenna is not rotated.

6. The surface profile detection apparatus according to claim 4, wherein an angle fixed plate configured to transmit the detection wave from the antenna to an angle fixed reflection plate, the angle variable reflection plate, and a link mechanism connected to the angle variable reflection plate are accommodated in the rotating case, and the angle fixed reflection plate, the angle variable reflection plate, and the link mechanism are simultaneously rotated.

7. The surface profile detection apparatus according to claim 4, wherein the opening of the rotating case is covered with an adiabatic material made of a heat-resistant material that transmits the detection wave, and a purge gas is ejected from the container side toward the adiabatic material along a radial direction to remove dust attached to the adiabatic material.

8. The surface profile detection apparatus according to claim 4, comprising:
an outer box surrounding the rotating case and attached to the opening of the container; and
an air filter configured to block the opening of the container and made of a heat-resistant material that transmits the detection wave,
wherein a purge gas introduced from a purge gas intake port provided in the outer box is discharged from the air filter.

9. The surface profile detection apparatus according to claim 1, wherein driving of the circumferential scanning means and the diametrical scanning means is intermittently stopped, a measurement is performed multiple times at stopped positions to obtain an average value.

10. An operation method comprising supplying the burden to the container, based on a detection result by the surface profile detection apparatus of a burden according to any one of claims 1 to 3 and 9.

11. An operation method comprising supplying the burden to the container, based on a detection result by the surface profile detection apparatus of a burden according to claim 4.
